# EUROPEAN PATENT SPECIFICATION

(11) **EP 0 480 318 B1**
(45) Date of publication and mention of the grant of the patent: **05.03.1997**
(21) Application number: 91116930.8
(22) Date of filing: 04.10.1991
(51) Int. Cl.: B29D 30/08

(54) **Tire building apparatus and method**
Verfahren und Vorrichtung zum Reifenaufbau
Procédé et dispositif de fabrication de pneus

(30) Priority: 12.10.1990 US 596360
(43) Date of publication of application: 15.04.1992
(73) Proprietor: THE GOODYEAR TIRE & RUBBER COMPANY, Akron, Ohio 44316-0001 (US)
(72) Inventor: Conger, Kenneth Dean, Munroe Falls, OH 44262 (US); Peck, Arland Arthur, Akron, OH 44312 (US); Broyles, Henry David, Uniontown, OH 44685 (US); Hart, James Michael, L-2380 Merl (LU); Becker, Michael Lee, Akron, OH 44319 (US); Testa, Dean Charles, Akron, OH 44319 (US); Stokes, James Dale, Akron, OH 44313 (US)
(74) Representative: Leitz, Paul

(56) References cited:
- EP-A- 0 242 689
- EP-A- 0 246 497
- WO-A-80/00327
- GB-A- 2 158 400
- US-A- 2 028 078
- US-A- 4 105 487

## Description

This invention relates to building tires and particularly to improvements in rapidly and accurately building belted high performance tire carcasses.

Heretofore, apparatus for building tire carcasses has utilized a single drum rotatable on a turret between a first position where the first position components were applied and a second position where the tire carcass was shaped and second position components applied including a belt overlay and tread. A tire building apparatus incorporating a pair of tire building drums rotatable between a first position and a second position is known (EP-A-0242689) in which the first drum and second drum are coaxial and mounted on a rotatable hub supported in a turret member. High performance tires require the application of a large number of components in the first position. This has caused an underutilization of the building equipment with the drum at the second position, especially when the apparatus has two turrets and therefore two second positions for the drums.

With the apparatus and method of this invention, two drums are mounted on one turret so that the high performance first station components can be applied to one drum in the first position while the rest of the components are applied to the tire carcass in the second position where the tire carcass is shaped. The drums are mounted on a supporting turret hub rotatable about a hub axis which is tilted or inclined to the horizontal during the movement of the drums between one position and the other. This makes possible the oscillation of the drums without requiring a hole in the floor and also makes possible the positioning of the drums at an angle to open up space adjacent the drums for the server equipment.

In this invention, the two drums are oscillated between a first position and a second position and are maintained at a fixed relation so that the positions of the different drums will be identical in the first position and the second position.

In accordance with the invention, there is provided a tire building process and a tire building apparatus as defined in the appended claims.

To acquaint persons skilled in the art most closely related to the present invention, a certain preferred embodiment thereof illustrating a best mode now contemplated for putting the invention into practice is described herein by and with reference to the annexed drawings forming a part of the specification.

### IN THE DRAWINGS:

Fig 1 is a fragmentary schematic plan view of a tire building machine embodying the invention with parts being broken away.

Fig 2 is an enlarged plan view of the tire building machine turret with drums in first and second positions.

Fig 3 is an enlarged elevation along the lines 3-3 in Fig 2.

Fig 4 is an enlarged elevation like Fig 3 showing the hub tilted and rotated 90 degrees to place the drums in an intermediate position between the first position and second position.

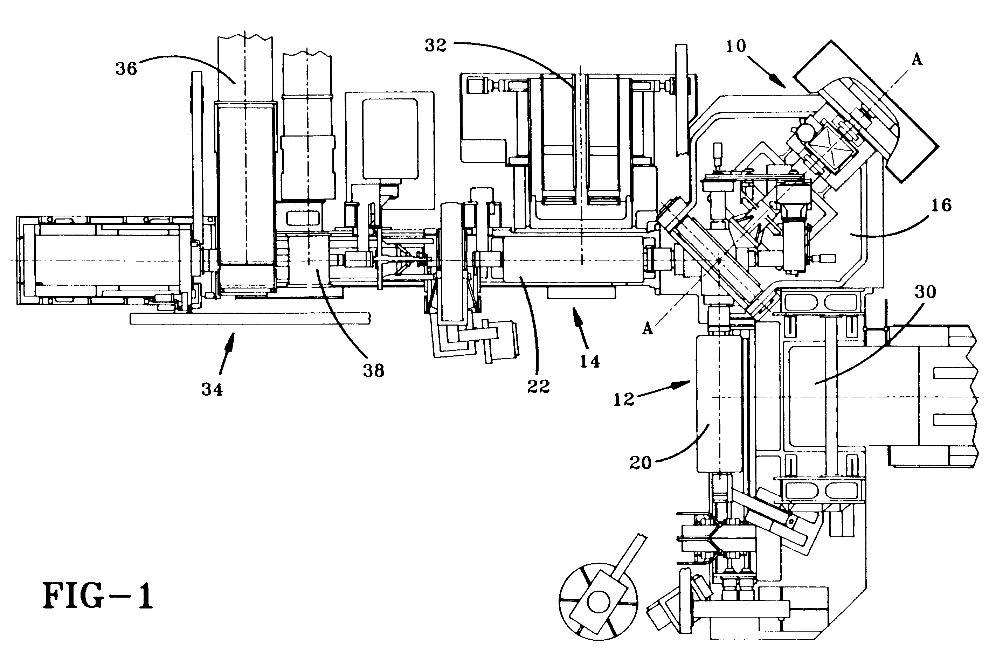

With reference to Fig 1, a tire building apparatus 10 is shown having a first position 12 for applying first position tire components and a second position 14 for applying second position tire components. A turret base 16 is located between the first position 12 and second position 14. A drum supporting hub 18 is rotatably mounted on the turret base 16 for rotation about a generally horizontal hub axis A-A.

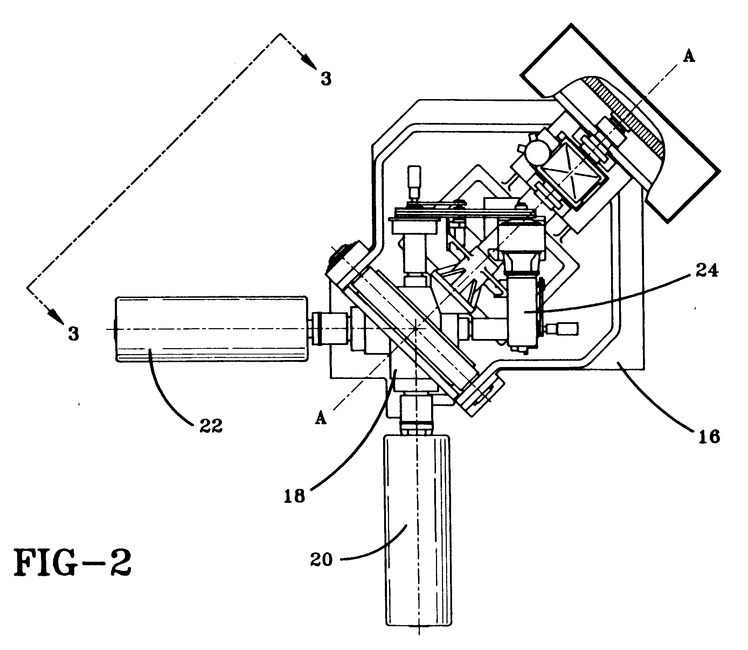

A first tire building drum 20 and a second tire building drum 22 are rotatably mounted about a first axis and a second axis positioned at an angle at 90 degrees on the hub 18 at locations on opposite sides of the hub axis A-A. As shown in Figs 2, 3 and 4 an independent drive means 24 is provided for the first drum 20 and an independent drive means 26 is provided for the second drum 22 to effect rotation of the drums about their axes as required. Other means for expanding the drums 20,22 may also be provided.

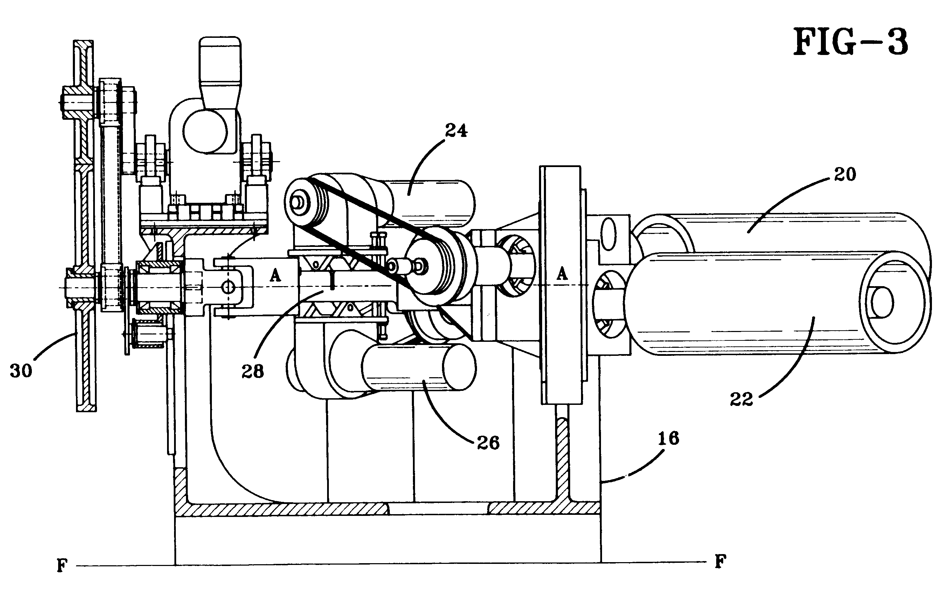

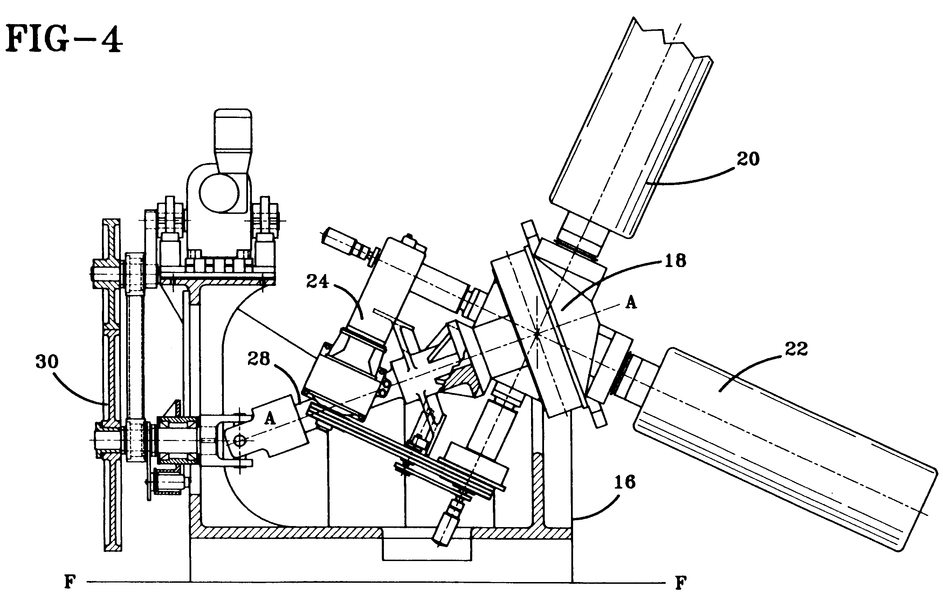

As shown in Figs 3 and 4, the hub 18 is connected to a shaft 28 which is rotated by a spur gear 30 turned by suitable drive means to rotate the first drum 20 and second drum 22 about the hub axis A-A between the first position 12 and second position 14. The free end of shaft 28 may be moved vertically to tilt the hub axis A-A as shown in Fig 4 during oscillating movement of the first drum 20 and second drum 22 about the hub axis A-A so that the drums will not swing below the floor line F-F.

As shown in Fig 1, servers 30 are provided at the first position 12 for applying the first position components such as a tire liner, toe guard, first and second plies, apexes and bead rings. These components are applied by rotating the first drum 20 about the first axis after which the first drum is rotated about the hub axis A-A to the second position 14. At the second position, sidewall servers 32 apply the sidewall. Meanwhile, at the breaker overlay tread station 34, servers 36 apply the overlay breaker and tread package to a collapsible drum 38 for transfer by a suitable transfer ring to the second position 14. The first drum 20 is then expanded to shape the tire carcass and urge it into engagement with the overlay breaker and tread package 38. The tire carcass is stitched and the transfer ring removed after the first drum 20 is contracted and the finished green tire carcass removed. Preferably the time required for applying the first position components and the time for applying the second position components including the transfer of the bead overlay tread package 38 is approximately the same for high performance tires and therefore the servers 30 and 36 are in operation substantially continuously without any delays.

While the first drum 20 is in the second position 14, the second drum 22 is in the first position 12 and first position components of a second tire carcass are applied to the second drum by the servers 30 in substantially the same manner described hereinabove for the first drum 20. After the first position components are applied to the second drum 22 the finished green tire carcass is removed from the first drum in the second position 14 the shaft 28 is then rotated and the hub 18 tilted to rotate the first drum 20 about the hub axis A-A to the first position 12 for receiving the first position components and to rotate the second drum about the hub axis to the second position 14 for receiving the second position components.

In accordance with this invention, the tire building process may include building a different tire carcass in another part of the apparatus utilizing a pair of drums supported on a rotatable hub of a second turret.

The turret, hub 18 and drums 20,22 for performing the process of this invention may be incorporated in different mechanisms. However, the mechanism used for the best mode process described hereinabove is shown and described in a copending patent application entitled "Two Gear, Connecting Arm And Crank Apparatus" which was assigned to the assignee of this application and filed at the same time this application was filed.

## Claims

1. A tire building process for building a tire carcass on a tire building apparatus (10) having a first position (12) and a second position (14) comprising;
(a) placing a first drum (20) in said first position (12) for rotation about a first axis and placing a second drum (22) in said second position (14) for rotation about about a second axis; and maintaining said first drum (20) and said second drum (22) in a fixed relation to each other on a hub having a hub axis A-A in the same plane with said first axis and said second axis so that said first drum (20) and said second drum (22) will be in identical locations at said first position (12) and at said second position (14) after oscillating movement of said first drum (20) and said second drum (22) on said hub.
(b) rotating said first drum (20) about said first axis and applying first position components to said first drum (20); characterized by:
(c) moving said first drum (20) to said second position (14) on said supporting turret hub (18) rotatable about said hub axis (A-A) inclined to the horizontal during said movement whereby said first drum (20) is raised to clear the floor FF and simultaneously placing said second drum (22) in said first position (12) for rotation about said second axis positioned at an angle to said first axis;
(d) rotating said second drum (22) about said second axis and applying first position components to said second drum (22);
(e) rotating said first drum (20) about said first axis and applying second position components over said first position components on said first drum (20) in said second position (14) to complete a first tire carcass;
(f) removing said first tire carcass from said drum (20);
(g) moving said first drum (20) about said hub axis A-A which is inclined to the horizontal to said first position (14) on said supporting hub (18) and simultaneously moving said second drum (22) about said hub axis A-A to said second position (14) on said supporting turret hub (18);
(h) rotating said second drum (22) about said second axis and applying second position components over said first position components on said second drum (22) in said second position (14) to complete a second tire carcass; and
(i) and removing said second tire carcass from said second drum (22).

2. The process of claim 1 wherein said first drum (20) and said second drum (22) are rotatably mounted on a turret hub (18) and placing said first drum (20) in said first position (14) includes oscillating said turret hub (18) to swing said first drum (20) into said first position (14).

3. The process of claim 2 wherein said second drum (22) is in said second position (14) when said first drum (20) is in said first position (12) and moving said first drum (20) to said second position (14) and simultaneously placing said second drum (22) in said first position (12) includes oscillating said turret hub (18) to swing said first drum (20) from said first position (12) into said second position (14) and to swing said second drum (22) from said second position (14) into said first position (12).

4. The process of claim 3 wherein said turret hub is rotatable about a generally horizontal hub axis A-A and said turret hub (18) is rotated 180 degrees to move said first drum (20) and said second drum (14) between said first position (12) and said second position (14).

5. The process of claim 1 wherein said second station components include a belt and tread assembly (38) moveable axially over said first drum (20) and said second drum (22) in said second position (14), and said first drum (20) and said second drum (22) being expandable to urge said first station components into engagement with said belt and tread assembly (38).

6. The process of claim 5 wherein the removing of said first tire carcass from said first drum (20) and removing said second tire carcass from said second drum (22) includes contracting said first drum (20) and said second drum (22) after application of said second station components.

7. A tire building apparatus for building a tire carcass on a first drum (20) and a second drum (22) in fixed relation to each other at spaced apart positions, said first drum (20) and said second drum (22) being mounted on a rotatable hub (18) supported in a turret member (18), said first drum (20) being rotatable about a first axis, said second drum (22) being rotatable about a second axis, said hub (18) being rotatable about a hub axis A-A and said first axis, said second axis and said hub axis A-A being in the same plane to provide for interchangeable positioning of said first drum (20) and said second drum (22) upon rotation of said hub (18) about hub axis A-A characterized by said hub axis A-A being inclined to the horizontal during said interchangeable positioning of said first drum (20) and said second drum (22) and by said first axis being positioned at an angle to said second axis.

8. The apparatus of claim 7 wherein the angle of said first axis to said second axis is an angle of 90 degrees.

## Patentansprüche

1. Reifenbauverfahren zum Bau einer Reifenkarkasse auf einer Reifenbauvorrichtung (10) mit einer ersten Position (12) und einer zweiten Position (14), aufweisend:
(a) Stellen einer ersten Trommel (20) in der ersten Position (12) zur Drehung um eine erste Achse und Stellen einer zweiten Trommel (22) in der zweiten Position (14) zur Drehung um eine zweite Achse; und Halten der ersten Trommel (20) und der zweiten Trommel (22) in einer festen Beziehung zueinander auf einer Nabe mit einer Nabenachse A-A in derselben Ebene mit der ersten Achse und der zweiten Achse, sodaß die erste Trommel (20) und die zweite Trommel (22) sich in identischen Stellen an der ersten Position (12) und an der zweiten Position (14) befinden nach einer Hin- und Herbewegung der ersten Trommel (20) und der zweiten Trommel (22) auf der Nabe;
(b) Drehen der ersten Trommel (20) um die erste Achse und Aufbringen der Komponenten der ersten Position auf die erste Trommel (20), gekennzeichnet durch:
(c) Bewegen der ersten Trommel (20) zu der zweiten Position (14) auf der Haltekopfnabe (18), die um die Nabenachse A-A drehbar ist, geneigt zu der horizontalen während der Bewegung, wodurch die erste Trommel (20) gehoben wird, um den Boden (FF) freizugeben und gleichzeitig die zweite Trommel (22) in die erste Position (12) zu stellen zur Drehung um die zweite Achse, die positioniert ist unter einem Winkel zu der ersten Achse;
(d) Drehen der zweiten Trommel (22) um die zweite Achse und Aufbringen der Komponenten der ersten Position auf die zweite Trommel (22);
(e) Drehen der ersten Trommel (20) um die erste Achse und Aufbringen der Komponenten der zweiten Position über den Komponenten der ersten Position auf der ersten Trommel (20) in der zweiten Position (14), um eine erste Reifenkarkasse fertigzustellen;
(f) Entfernen der ersten Reifenkarkasse von der Trommel (20);
(g) Bewegen der ersten Trommel (20) um die Nabenachse A-A, die geneigt ist zu der Horizontalen, in die ersten Positionen (14) auf der Haltenabe (18) und gleichzeitiges Bewegen der zweiten Trommel (22) um die Nabenachse A-A zu der zweiten Position (14) auf der Haltekopfnabe (18);
(h) Drehen der Zweiten Trommel (22) um die zweite Achse und Aufbringen der Komponenten zweiter Position über den Komponenten erster Position auf der zweiten Trommel (22) in der zweiten Position (14), um eine zweite Reifenkarkasse fertigzustellen; und
(i) Entfernen der zweiten Reifenkarkasse von der zweiten Trommel (22).

2. Verfahren nach Anspruch 1, wobei die erste Trommel (20) und die zweite Trommel (22) drehbar auf einer Kopfnabe (18) befestigt sind und wobei das Stellen der ersten Trommel (20) in der ersten Position (14) die Hin- und Herbewegung bzw. Oszillation der Kopfnabe (18) aufweist zur Schwenkung der ersten Trommel (20) in die erste Position (14).

3. Verfahren nach Anspruch 2, wobei die zweite Trommel (22) sich in der zweiten Position (14) befindet, wenn die erste Trommel (20) sich in der ersten Position (12) befindet und Bewegen der ersten Trommel (20) in die zweite Position (14) wobei gleichzeitig das Stellen der Trommel (22) in der ersten Position (12) die Hin- und Herbewegung bzw. Oszillation der Kopfnabe (18) aufweist zum Schwenken der ersten Trommel (20) von der ersten Position (12) in die zweite Position (14) und zum Schwenken der zweiten Trommel (22) von der zweiten Position (14) in die erste Position (12).

4. Verfahren nach Anspruch 3, wobei die Kopfnabe drehbar ist um eine allgemein horizontale Nabenachse A-A und die Kopfnabe (18) gedreht wird um 180° zur Bewegung der ersten Trommel (20) und der zweiten Trommel (14) zwischen der ersten Position (12) und der zweiten Position (14).

5. Verfahren nach Anspruch 1, wobei die Komponenten der zweiten Station aufweisen eine Gürtel- und Profilanordnung (38), die beweglich axial über der ersten Trommel (20) und der zweiten Trommel (22) in der zweiten Position (14) ist, und die erste Trommel (20) und die zweite Trommel (22) erweiterbar sind, um die Komponenten der ersten Station in Eingriff mit der Gürtel- und Profilanordnung (38) zu zwingen.

6. Verfahren nach Anspruch 5, wobei das Entfernen der ersten Reifenkarkasse von der ersten Trommel (20) und das Entfernen der zweiten Reifenkarkasse von der zweiten Trommel (22) aufweist das Zusammenziehen der ersten Trommel (20) und der zweiten Trommel (22) nach Aufbringen der Komponenten der zweiten Station.

7. Reifenbauvorrichtung zum Bau einer Reifenkarkasse auf einer ersten Trommel (20) und einer zweiten Trommel (22) in fester Beziehung zueinander an beabstandeten Positionen, wobei die erste Trommel (20) und die zweite Trommel (22) befestigt sind auf einer drehbaren Nabe (18), die gelagert ist in einem Kopfelement (18), wobei die erste Trommel (20) drehbar ist um eine erste Achse, wobei die zweite Trommel (22) drehbar ist um eine zweite Achse, die Nabe (18) drehbar ist um eine Nabenachse A-A und die erste Achse, die zweite Achse und die Nabenachse A-A sich in derselben Ebene befinden, um für eine austauschbare Positionierung der ersten Trommel (20) und der zweiten Trommel (22) bei der Drehung der Nabe (18) um die Nabenachse A-A zu sorgen, dadurch gekennzeichnet, daß die Nabenachse A-A geneigt zur horizontalen ist während der austauschbaren Positionierung der ersten Trommel (20) und der zweiten Trommel (22), und daß die erste Achse positioniert ist unter einem Winkel zu der zweiten Achse.

8. Vorrichtung nach Anspruch 7, wobei der Winkel der ersten Achse zu der zweiten Achse einen Winkel von 90° ist.

## Revendications

1. Procédé de confection d'un bandage pneumatique pour confectionner une carcasse de pneumatique sur un appareil (10) de confection de pneumatiques, possédant une première position (12) et une seconde position (14), comprenant le fait de:
(a) placer un premier tambour (20) dans ladite première position (12) à des fins de rotation autour d'un premier axe et placer un second tambour (22) dans ladite seconde position (14) à des fins de rotation autour d'un second axe; et maintenir ledit premier tambour (20) et ledit second tambour (22) dans une relation fixe l'un par rapport à l'autre sur un moyeu dont l'axe (A-A) se trouve dans le même plan que ledit premier axe et que ledit second axe de telle sorte que ledit premier tambour (20) et ledit second tambour (22) se trouveront à des endroits identiques à ladite première position (12) et à ladite seconde position (14) après avoir fait osciller ledit premier tambour (20) et ledit second tambour (22) sur ledit moyeu,
(b) faire tourner ledit premier tambour (20) autour dudit premier axe et appliquer des composants de première position sur ledit premier tambour (20); caractérisé par le fait de :
(c) faire passer ledit premier tambour (20) dans ladite seconde position (14) sur ledit moyeu (18) de tourelle de support rotatif autour dudit axe de moyeu (A-A) incliné par rapport à l'horizontale au cours dudit mouvement, par lequel ledit premier tambour (20) se soulève pour s'éloigner du sol (F-F) et placer simultanément ledit second tambour (22) dans ladite première position (12) à des fins de rotation autour dudit second axe positionné en formant un angle par rapport audit premier axe;
(d) faire tourner ledit second tambour (22) autour dudit second axe et appliquer des composants de première position sur ledit second tambour (22);
(e) faire tourner ledit premier tambour (20) autour dudit premier axe et appliquer des composants de seconde position par-dessus lesdits composants de première position sur ledit premier tambour (20) dans ladite seconde position (14) pour terminer une première carcasse de pneumatique;
(f) retirer ladite première carcasse de pneumatique dudit tambour (20);
(g) faire passer ledit premier tambour (20) autour dudit axe de moyeu A-A incliné par rapport à l'horizontale dans ladite première position (14) sur ledit moyeu de support (18) et faire passer simultanément ledit second tambour (22) autour dudit axe de moyeu A-A dans ladite seconde position (14) sur ledit moyeu (18) de tourelle de support;
(h) faire tourner ledit second tambour (22) autour dudit second axe et appliquer les composants de seconde position par-dessus lesdits composants de première position sur ledit second tambour (22) dans ladite seconde position (14) pour terminer une seconde carcasse de pneumatique; et
(i) retirer ladite seconde carcasse de pneumatique dudit second tambour (22).

2. Procédé selon la revendication 1, dans lequel ledit premier tambour (20) et ledit second tambour (22) sont montés en rotation sur un moyeu de tourelle (18), le placement dudit premier tambour (20) dans ladite première position (14) englobant l'oscillation dudit moyeu de tourelle (18) pour faire basculer ledit premier tambour (20) dans ladite première position (14).

3. Procédé selon la revendication 1, dans lequel ledit second tambour (22) se trouve dans ladite seconde position (14) lorsque ledit premier tambour (20) se trouve dans ladite première position (12), le déplacement dudit premier tambour (20) dans ladite seconde position (14) et le placement simultané dudit second tambour (22) dans ladite première position (12) englobant l'oscillation dudit moyeu de tourelle (18) pour faire basculer ledit premier tambour (20) de ladite première position (12) dans la seconde position (14) et pour faire basculer ledit second tambour (22) de ladite seconde position (14) dans ladite première position (12).

4. Procédé selon la revendication 3, dans lequel ledit moyeu de tourelle est rotatif autour d'un axe de moyeu A-A généralement horizontal et ledit moyeu de tourelle (18) effectue une rotation de 180 degrés pour déplacer ledit premier tambour (20) et ledit second tambour (14) entre ladite première position (12) et ladite seconde position (14).

5. Procédé selon la revendication 1, dans lequel lesdits composants du second poste englobent un assemblage de ceinture et de bande de roulement (38) mobile en direction axiale par-dessus ledit premier tambour (20) et ledit second tambour (22) dans ladite seconde position (14), ledit premier tambour (20) et ledit second tambour (22) étant à même de s'élargir pour presser lesdits composants du premier poste en contact avec ledit assemblage de ceinture et de bande de roulement (38).

6. Procédé selon la revendication 5, dans lequel le retrait de ladite première carcasse de pneumatique dudit premier tambour (20) et le retrait de ladite seconde carcasse de pneumatique dudit second tambour (22) englobent la rétraction dudit premier tambour (20) et dudit second tambour (22) après application desdits composants du second poste.

7. Appareil de confection de pneumatiques pour confectionner une carcasse de pneumatique sur un premier tambour (20) et sur un second tambour (22) en relation fixe l'un par rapport à l'autre dans des positions espacées, ledit premier tambour (20) et ledit second tambour (22) étant montés sur un moyeu rotatif (18) supporté dans un élément de tourelle (18), ledit premier tambour (20) étant rotatif autour d'un premier axe, ledit second tambour (22) étant rotatif autour d'un second axe, ledit moyeu (18) étant rotatif autour d'un axe de moyeu A-A et dudit premier axe, ledit second axe et ledit axe de moyeu A-A se trouvant dans le même plan pour procurer un positionnement interchangeable dudit premier tambour (20) et dudit second tambour (22) après rotation dudit moyeu (18) autour de l'axe de moyeu A-A, caractérisé par le fait que ledit axe de moyeu A-A est incliné par rapport à l'horizontale au cours dudit positionnement interchangeable dudit premier tambour (20) et dudit second tambour (22), et par le fait que ledit premier axe est positionné en formant un angle par rapport audit second axe.

8. Appareil selon la revendication 7, dans lequel l'angle formé par ledit premier axe par rapport audit second axe est un angle de 90 degrés.
